# FASCICULE DE BREVET EUROPEEN

(11) **EP 2 593 320 B1**
(45) Date de publication et mention de la délivrance du brevet: **06.09.2017**
(21) Numéro de dépôt: 11749466.6
(22) Date de dépôt: 13.07.2011
(51) Int. Cl.: B60K 6/365, B60K 6/383, B60K 6/40, B60K 6/48

(54) **GROUPE MOTOPROPULSEUR A DOUBLE TRAIN EPICYCLOIDAL POUR VEHICULE AUTOMOBILE DE TYPE HYBRIDE**
ANTRIEBSZUG MIT EINEM DOPPELTEN EPIZYKLISCHEN GETRIEBEZUG FÜR EIN HYBRIDKRAFTFAHRZEUG
POWER TRAIN WITH DOUBLE PLANETARY GEAR UNIT FOR AN HYBRID AUTOMOBILE

(30) Priorité: 24.05.2011 FR 1101595; 16.07.2010 FR 1003002
(43) Date de publication de la demande: 22.05.2013
(73) Titulaire: IFP Énergies nouvelles, 92852 Rueil-Malmaison Cedex (FR)
(72) Inventeur: VENTURI, Stéphane, F-07100 Roiffieux (FR)
(86) Numéro de dépôt international: PCT/FR2011/000418
(87) Numéro de publication internationale: WO 2012/007661

(56) Documents cités:
- WO-A2-2006/038224
- DE-A1-102009 044 491
- JP-A- H08 318 747
- US-A1- 2004 043 859
- US-A1- 2007 275 808
- US-B1- 6 344 008
- US-B1- 6 592 484

## Description

La présente invention se rapporte à un groupe motopropulseur pour l'entraînement d'un véhicule automobile de type hybride.

Comme cela est déjà connu, ce type de véhicule comporte un groupe motopropulseur qui utilise seul ou en combinaison, comme mode d'entraînement en traction/propulsion, un moteur thermique à combustion interne avec un dispositif de variation de vitesse, et une machine électrique rotative reliée à une source électrique, telle qu'une ou plusieurs batteries.

Cette combinaison a pour avantage d'optimiser les performances de ce véhicule, notamment en réduisant les émissions de polluants dans l'atmosphère et en diminuant la consommation en carburant.

Ainsi, lorsque l'on souhaite déplacer le véhicule avec un couple important sur une grande plage de vitesses tout en limitant la génération de gaz d'échappement et de bruit, comme dans un site urbain, l'utilisation de la machine électrique est privilégiée pour entraîner en déplacement ce véhicule.

Par contre, le moteur thermique est utilisé pour déplacer ce véhicule lors d'utilisations où une puissance d'entraînement élevée et une grande autonomie de fonctionnement sont demandées.

Il a été également proposé, notamment dans le brevet US 6 344 008, un véhicule hybride où une partie du dispositif de variation de vitesse comprend un train épicycloïdal avec une couronne, un planétaire et un porte-satellites pour commander le déplacement du véhicule au travers de son essieu moteur.

Il est également connu par le document US 6592484 de disposer d'un autre train épicycloïdal en série avec le train épicycloïdal pour commander le déplacement du véhicule au travers de son essieu moteur. Le document JPH08318747 divulgue un groupe motopropulseur de véhicule avec une machine électrique, un moteur thermique, un train épicycloïdal de moteur avec un planétaire et une couronne, une voie de transmission de mouvement à un essieu moteur, et un autre train épicycloïdal accouplé avec le train épicycloïdal de moteur et la machine électrique, et portant un accouplement à commande électrique. Dans ce type de train épicycloïdal, il est difficile de pouvoir contrôler le sens de rotation des différents éléments qui peut aller à l'encontre de celui qui est souhaité. Cela entraîne des efforts parasites et des couples résistants qui nuisent au bon fonctionnement de ce train épicycloïdal.

Comme cela est mieux décrit dans la demande de brevet français N°10/00128 du demandeur, ce dispositif de variation de vitesse a été perfectionné en agençant le train épicycloïdal avec la mise en place d'accouplements unidirectionnels et d'embrayages à commande contrôlée et en disposant un dispositif de transmission à vitesse variable entre la machine électrique et l'essieu du véhicule.

Dans un souci constant d'amélioration, le demandeur a encore perfectionné ce dispositif de transmission à vitesse variable en le simplifiant tout en offrant la possibilité de pouvoir entraîner le véhicule par la machine électrique selon différents rapports de vitesse.

A cet effet, l'invention concerne un groupe motopropulseur de véhicule automobile de type hybride comportant une machine électrique, un moteur thermique, un dispositif de variation de vitesse comprenant un train épicycloïdal de moteur avec un planétaire et une couronne reliés chacun à l'arbre du moteur thermique par un embrayage à commande contrôlée et à une partie fixe du véhicule par un accouplement unidirectionnel, et une voie de transmission de mouvement à un essieu moteur, le groupe motopropulseur comprenant un autre train épicycloïdal accouplé avec le train épicycloïdal de moteur et la machine électrique, ledit autre train portant un accouplement à commande contrôlée raccordant ce train à une partie fixe du groupe motopropulseur ou à ladite voie de transmission de mouvement.

Le groupe motopropulseur peut comprendre au moins un accouplement à commande contrôlé porté par au moins l'un des éléments de l'autre train épicycloïdal.

Le groupe motopropulseur peut comprendre au moins un accouplement à commande contrôlé porté par au moins l'un des éléments du train épicycloïdal de moteur.

L'accouplement à commande contrôlée peut être porté par la couronne du train épicycloïdal de moteur.

L'accouplement à commande contrôlé peut comprendre un actionneur et au moins une surface d'accouplement avec ledit actionneur.

La surface d'accouplement peut être portée par une partie fixe du groupe motopropulseur.

La surface d'accouplement peut être portée par l'un des éléments de l'autre train épicycloïdal.

La surface d'accouplement peut être portée par le porte-satellites de l'autre train épicycloïdal.

L'actionneur peut être porté par l'un des éléments constitutifs de l'autre train épicycloïdal.

L'actionneur peut être porté par la couronne de l'autre train épicycloïdal.

L'actionneur peut être porté par le planétaire de l'autre train épicycloïdal.

Le train épicycloïdal de machine et l'autre train épicycloïdal peuvent être placés coaxialement l'un avec l'autre.

De manière avantageuse, le groupe motopropulseur peut comprendre une voie de transmission de mouvement de rotation parallèle à l'arbre de moteur pour la liaison entre ledit arbre de moteur et la couronne de l'un des trains épicycloïdaux.

La voie de transmission de mouvement de rotation peut comprendre un arbre de transmission portant des moyens de liaison en rotation avec l'arbre et la couronne.

La voie de transmission de mouvement de rotation peut comprendre deux demi-arbres reliés entre eux par un accouplement unidirectionnel.

De manière préférentielle, l'accouplement unidirectionnel peut comprendre une roue libre.

Les moyens de liaison avec l'arbre peuvent comprendre un engrenage.

Les moyens de liaison avec la couronne peuvent comprendre une roue dentée coopérant avec une denture extérieure portée par le bandeau de ladite couronne.

L'arbre de transmission peut être en parallèle de l'arbre de moteur.

L'arbre de transmission peut être supporté par des paliers portés par une partie fixe dudit groupe.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est un schéma montrant un groupe motopropulseur selon l'invention appliqué à un système d'entraînement d'un véhicule hybride, et
- les figures 2 à 9 qui illustrent d'autres variantes du groupe motopropulseur de la figure 1.

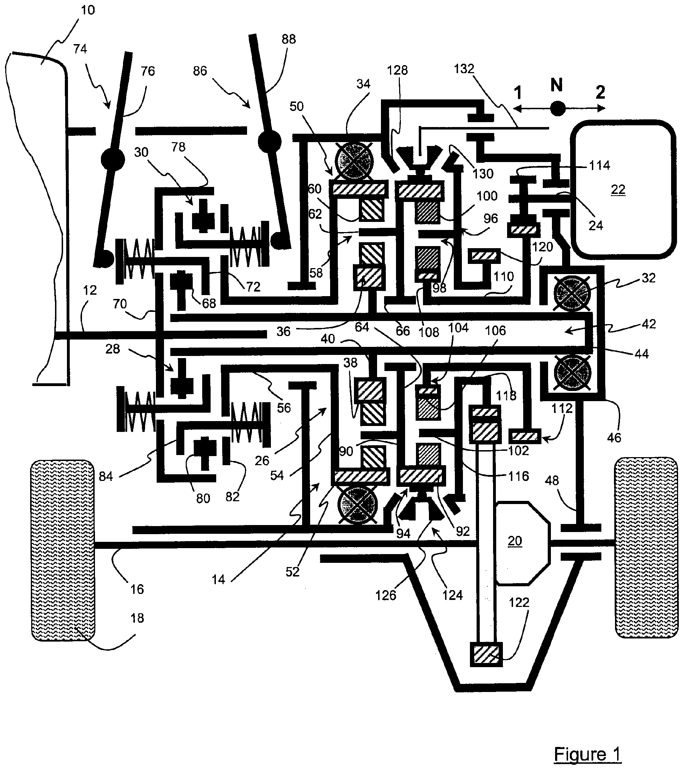

Sur la figure 1, le groupe motopropulseur comprend un moteur thermique 10, notamment un moteur à combustion interne, avec un arbre moteur 12, ici issu du vilebrequin de ce moteur, un dispositif de variation de vitesse 14 et un essieu moteur 16 qui permet d'entraîner les roues motrices 18 du véhicule, avantageusement par l'intermédiaire d'un pont différentiel 20.

Comme il sera explicité plus loin, l'arbre moteur 12 a aussi une fonction d'arbre récepteur mais pour des raisons de simplification de la description, cet arbre reste dénommé arbre moteur de manière à pouvoir le distinguer des autres arbres du dispositif de transmission.

Le groupe motopropulseur comprend également une machine électrique 22 avec un rotor 24, qui peut fonctionner en tant que moteur électrique d'entraînement pour le véhicule ou en tant que générateur d'énergie électrique et plus particulièrement en tant qu'alternateur pour assurer la charge des batteries (non représentées).

Le dispositif de variation de vitesse 14 comprend un train épicycloïdal principal 26, baptisé train épicycloïdal de moteur thermique, avec deux embrayages à commande contrôlée 28, 30 et deux accouplements unidirectionnels automatiques, comme des roues libres 32, 34.

Plus précisément, le train épicycloïdal de moteur 26 comprend un planétaire 36 avec un bandeau 38 denté extérieurement et porté par un flasque 40. Ce flasque est monté fixement sur un arbre creux 42, dit arbre de planétaire, venant coiffer l'arbre 12 du moteur en étant libre en rotation mais fixe en translation par rapport à celui-ci. L'extrémité libre 44 de cet arbre prend appui dans un palier 46 porté par une partie fixe 48 du groupe motopropulseur du véhicule au travers de l'accouplement unidirectionnel 32, baptisé roue libre planétaire.

Ce train comprend également une couronne 50 avec un anneau 52 denté intérieurement, placé concentriquement au planétaire, et un voile 54 relié à un arbre creux 56, dit arbre de couronne, venant entourer l'arbre creux 42 du planétaire tout en étant libre en rotation mais fixe en translation par rapport à celui-ci. Cette couronne est reliée extérieurement à la partie fixe 48 du groupe motopropulseur du véhicule par l'accouplement unidirectionnel 34, baptisé roue libre couronne.

Bien entendu, les deux roues libres 32 et 34 sont placées de manière telle que la couronne 50 et le planétaire 36 ne puissent tourner que dans le même sens et préférentiellement dans le même sens que l'arbre 12 du moteur.

Enfin, ce train épicycloïdal de moteur comprend un porte-satellites 58 avec avantageusement trois satellites 60, en forme de roue à denture extérieure, placés dans un même intervalle angulaire l'un par rapport à l'autre (ici à 120°) et engrenant avec la couronne et le planétaire.

Pour cela, l'anneau 52 de la couronne, le bandeau 38 du planétaire et les satellites 60 sont situés dans un même plan, ici dans un plan vertical en considérant la figure 1.

Ces satellites sont portés chacun par un axe horizontal 62 en étant libres en rotation mais fixes en translation sur celui-ci. Ces axes de satellites sont reliés à une paroi verticale 64 reliée à un palier tubulaire 66, dit palier de porte-satellites, qui vient entourer l'arbre de planétaire 42 en étant libre en rotation sur celui-ci.

Les extrémités libres des arbres du planétaire et de la couronne portent chacune un accouplement à commande contrôlée 28 et 30, de préférence un embrayage à friction.

Ainsi l'embrayage 28, dit embrayage de planétaire, comprend un disque de friction 68, porté de manière fixe en rotation mais libre en translation axiale sur l'arbre de planétaire 42. Ce disque de fiction est prévu pour être serré entre un plateau de réaction 70, monté fixement en translation et en rotation sur l'arbre 12 du moteur, et un plateau de pression 72, mobile en translation par rapport à ce plateau de pression tout en étant fixe rotation avec celui-ci. Ce plateau de pression est commandé en déplacement axial par un actionneur de débrayage 74, ici sous la forme d'un levier 76 basculant sur un point fixe du groupe motopropulseur.

Le plateau de pression 70 se poursuit, sur sa périphérie, par une paroi horizontale 78 qui porte, de manière fixe en rotation et libre en translation axiale, un autre disque de friction 80, coaxial au disque de friction 68 et qui fait partie de l'autre embrayage 30, dénommé embrayage de couronne.

Ce disque est à même d'être serré entre un plateau de réaction 82, monté fixement en translation et en rotation sur l'extrémité libre de l'arbre de couronne 56, et un plateau de pression 84 mobile en translation axial sous l'action d'un autre actionneur de débrayage 86. Comme précédemment mentionné, cet actionneur est sous la forme d'un levier 88 basculant sur un point fixe du groupe motopropulseur.

Comme mieux illustré sur la figure 1, la paroi verticale 64 du porte-satellites 58 se poursuit sur sa périphérie par un anneau vertical plat 90 à partir duquel est placé un bandeau horizontal 92 denté intérieurement. Cet anneau et ce bandeau forment ainsi une couronne 94 d'un autre train épicycloïdal additionnel 96, dénommé dans la suite de la description train épicycloïdal de machine.

Ce train épicycloïdal de machine 96, qui est placé coaxialement au train épicycloïdal de moteur 26 en entourant l'arbre de planétaire 42, comprend un porte-satellites 98 avec avantageusement trois satellites 100, en forme de roue à denture extérieure, portés par des axes de satellites 102 et placés dans un même intervalle angulaire l'un par rapport à l'autre (ici à 120°) et engrenant avec la denture du bandeau 92 de la couronne 94.

Ces satellites coopèrent également à engrènement avec un planétaire 104 qui comprend un bandeau 106 denté extérieurement et porté par un flasque 108. Ce flasque est monté fixement sur un arbre tubulaire 110, dit arbre de planétaire additionnel, qui vient entourer, librement en rotation mais fixement en translation, l'arbre de planétaire 42 du train épicycloïdal de moteur 26. L'extrémité libre de l'arbre tubulaire 110 porte fixement une roue dentée 112 qui coopère avec une autre roue dentée 114 portée fixement par le rotor 24 de la machine électrique.

Bien entendu, comme pour le train épicycloïdal de moteur thermique 26, le bandeau 92 de la couronne 94, le bandeau dentée 106 du planétaire et les satellites 100 sont situés dans un même plan, ici dans un plan vertical en considérant la figure 1.

Les axes de satellites 102 sont portés par un plateau 116 faisant partie du porte-satellites et comportant un palier tubulaire 118 entourant librement en rotation mais fixement en translation l'arbre tubulaire de planétaire 110.

Ce palier 118 porte fixement une roue dentée 120 qui coopère avec une autre roue dentée 122 liée à l'essieu moteur 16. Cet ensemble des deux roues dentées forme ainsi une voie de transmission de mouvement entre le train épicycloïdal de machine 96 et l'essieu 16.

Le train épicycloïdal 96 porte également un accouplement à commande contrôlée 124 permettant de relier sa couronne 94, soit au plateau 116, soit à la partie fixe 48 du groupe motopropulseur.

De manière avantageuse, cet accouplement comprend un actionneur à griffes 126 avec deux positions d'engrènement (1, 2) et une position neutre (N). Cet actionneur est porté fixement en rotation par la paroi extérieure du bandeau 92 de la couronne 94 tout en étant mobile en translation axiale sur celle ci. Cet actionneur est prévu pour coopérer, soit avec une surface d'accouplement fixe 128 portée par une partie fixe du groupe motopropulseur, soit avec une autre surface d'accouplement 130 portée par l'extrémité périphérique du plateau 116.

Pour cela, l'actionneur est soumis à un moyen de commande 132 lui permettant de réaliser l'accouplement avec la partie fixe 128 du groupe motopropulseur (position 1), avec le plateau 116 (position 2) ou d'être en position neutre (position N) sans être en liaison avec aucune des deux surfaces d'accouplement.

Les différentes configurations de l'ensemble du groupe motopropulseur vont être maintenant décrites en fonction du mode de traction/propulsion utilisé et/ou du fonctionnement du moteur thermique ainsi que de la machine électrique.

Pour ce qui concerne l'entrainement du véhicule dans le mode de fonctionnement électrique où seule la machine électrique 22 est utilisée, notamment en tant que machine motrice du véhicule, les deux embrayages 28 et 30 sont inactifs, l'actionneur 126 est en position neutre (N) en n'étant en prise avec aucune des deux surfaces d'accouplement 128 ou 130.

Dés que la machine électrique 22 est alimentée électriquement, son rotor 24 est entraîné en rotation et cette machine fonctionne en tant que moteur électrique. Ce mouvement de rotation est ensuite transmis à la roue dentée 112 par la roue dentée 114 du rotor 24.

A partir de cette configuration, l'actionneur 126 est commandé dans l'une des positions 1 ou 2 pour entraîner en rotation l'essieu 16 du véhicule.

Dans la position 1, l'actionneur est en prise avec la surface d'accouplement 128 de la partie fixe en immobilisant en rotation la couronne 94 du train épicycloïdal de machine électrique 96. Par cela, le mouvement de rotation de la roue dentée 112 est transmis au planétaire 104 par l'arbre de planétaire 110. Cette rotation est ensuite transmise aux satellites 100 qui, compte tenu de l'immobilisation en rotation de la couronne 94, engrènent sur celle-ci en entraînant le porte-satellites 98 en rotation. Ce mouvement de rotation est ensuite transmis à la roue dentée 120 de la voie de transmission de mouvement par le palier tubulaire 118. La rotation de cette roue dentée, qui coopère par engrènement avec la roue dentée d'essieu 112, est alors transmise à l'essieu 16 pour entrainer les roues 18 du véhicule.

Grâce à cela, le véhicule est entraîné en déplacement par une traction/propulsion uniquement électrique sur un rapport de vitesse court et cela aussi bien en marche avant qu'en marche arrière.

De plus, en cas de décélération du véhicule, il est possible de récupérer de l'énergie électrique, la machine électrique 22 est entrainée en rotation sous l'effet de la rotation des roues du véhicule et des roues dentés 122, 120, 112, 114, du planétaire 104 et des satellites 100. Ceci permet de la faire fonctionner alors en tant que génératrice de courant, notamment pour recharger les batteries.

Dans le cas où l'actionneur à griffes 126 est en prise avec la surface d'accouplement 130 du plateau 116 (position 2), la couronne 94 est liée à rotation à ce dernier. La rotation du planétaire 104 est transmise aux satellites 100 qui eux-mêmes la transmette à la couronne 94. De par la liaison avec le plateau 116, la rotation de cette couronne est retransmise à la roue dentée 120 qui coopère avec la roue dentée d'essieu 122 en entrainant ainsi en rotation les roues du véhicule.

Dans cette configuration, l'arbre de planétaire 110, le palier 118 du plateau 116 et le palier 66 de porte-satellites 58 lié à la couronne 94 tournent au même régime.

Pour pouvoir réaliser la même fonction et cela sans sortir du cadre de l'invention, il est également possible de mettre en prise deux des trois arbres du train épicycloïdal de machine 96, soit en accouplant la couronne 94 et le porte-satellites 98, soit en accouplant la couronne 94 et le planétaire 104, soit en accouplant le porte-satellites 98 et le planétaire 104.

Il est à noter que la rotation de la couronne 94 est entièrement libre car les éléments du train épicycloïdal de moteur 26 liés à celle-ci par les axes de satellites 62 sont libres en rotation et les embrayages 28 et 30 sont inactifs.

Par cela, le véhicule est entrainé en déplacement par traction/propulsion électrique sur un rapport de vitesse long avec possibilité de récupération d'énergie lors des décélérations du véhicule en marche avant.

Dans le cas où l'actionneur 126 est en position neutre (N), la traction/propulsion en marche avant du véhicule est réalisée sur le rapport court, puisque l'immobilisation de la couronne 94 est obtenue par l'arrêt en rotation de la couronne 50 et du planétaire 36 du train épicycloïdal de moteur 26 au travers des roues libres 34 et 32.

Pour le démarrage du moteur thermique pour le véhicule à l'arrêt avec la configuration selon laquelle l'actionneur 126 en position neutre, le frein de parking (que comporte habituellement tout véhicule) est serré avec le porte-satellites 98 du train épicycloïdal de machine 96 bloqué en rotation et les embrayages 28 et 30 en position active.

Par cela, il est possible, d'une part, de démarrer le moteur thermique 10 avec la machine électrique 22, qui est utilisée en tant que démarreur électrique, et, d'autre part, de recharger les batteries en utilisant le machine électrique 22 en tant que générateur qui est dans ce cas entraînée par le moteur thermique.

Pour le démarrage du moteur 10, la machine 22 est alimentée par les batteries, ce qui a pour effet d'entrainer en rotation le rotor 24. Cette rotation entraîne le planétaire 104 par l'intermédiaire des roues dentées 114 et 112, qui, à son tour, entraîne la couronne 94 par l'intermédiaire des satellites 100. Les deux embrayages 28 et 30 étant fermés, la couronne 94 entraîne l'ensemble des éléments du train épicycloïdal de moteur 26 par l'intermédiaire du porte-satellites 58, qui entraînent l'arbre 12 du moteur thermique 10.

Ceci permet donc d'assurer le démarrage du moteur thermique par la mise en rotation de son arbre 12 sous l'impulsion de la machine électrique 22.

Bien entendu, dès que le démarrage du moteur thermique est obtenu, l'un et/ou l'autre des actionneurs de débrayages 74 et/ou 86 peut être commandé de façon à désaccoupler l'arbre 12 de moteur thermique de la machine 22 en rendant inactif l'embrayage 28 et/ou 30.

Pour le démarrage du moteur thermique alors que le véhicule est en déplacement sous l'effet de la machine électrique 22, ce démarrage s'opère par fermeture des deux embrayages 28 et 30. La couronne 94 entraîne alors l'ensemble des éléments du train épicycloïdal 26 par l'intermédiaire du porte-satellites 58, qui eux mêmes entraînent l'arbre 12 du moteur thermique.

Cette configuration permet de faire fonctionner le véhicule en marche avant tout en laissant la possibilité au moteur thermique 10 de rester en fonctionnement, notamment pour l'entraînement des auxiliaires du véhicule (pompe de direction assistée, compresseur de climatisation,...).

Ainsi, la machine électrique 22 a donc un double rôle, d'une part, la traction/propulsion du véhicule et, d'autre part, le démarrage du moteur thermique alors que le véhicule est en circulation.

Les autres configurations vont être décrites maintenant pour illustrer la traction/propulsion du véhicule par le moteur thermique 10 selon différents rapports de vitesse ainsi que les différentes possibilités d'utiliser la machine électrique 22 en tant que génératrice électrique.

Dans ces configurations, l'actionneur 126 est, soit dans la position neutre, soit dans la position 2 et les embrayages 28 et 30 sont soit tous deux en position active, soit l'un ou l'autre en position active.

Dans la configuration où les deux embrayages 28 et 30 sont en position active, la rotation de l'arbre 12 du moteur thermique 10 entraîne en rotation l'arbre 56 avec la couronne 50, l'arbre 42 avec le planétaire 36 et en conséquence le porte-satellites 58. Cette rotation du porte-satellites est ensuite transmise au travers de la paroi 64 à la couronne 94 du train épicycloïdal de machine.

Lorsque l'actionneur à griffes 126 est en position 2, l'arbre de planétaire 110, le palier 118 du plateau 116 et le palier 66 de porte-satellites 58 lié à la couronne 94 tournent au même régime.

Le porte-satellites 98 du train épicycloïdal de machine entraîne alors l'essieu 16 par l'intermédiaire des roues 120 et 122, alors que le planétaire 104 entraîne la machine électrique 22 en rotation par l'intermédiaire des roues 112 et 114.

Dans ce mode de traction thermique, la machine électrique 22 peut être utilisée, soit en fonctionnement moteur avec les puissances de la machine électrique et du moteur thermique combinées pour être transmise à l'essieu 16, soit en fonctionnement générateur pour alimenter les batteries ou tous accessoires électrique du véhicule.

Dans ce cas, la puissance du moteur thermique sert, d'une part, à la traction véhicule, et, d'autre part, à entraîner en rotation le rotor 24 de cette machine pour utiliser cette machine en tant que génératrice.

A partir de cela, l'un ou l'autre des embrayages peut être placé en position inactive pour obtenir d'autres rapports de vitesse.

Pour la position inactive de l'embrayage 28 et active de l'embrayage 30, la rotation de l'arbre 12 du moteur thermique 10 entraîne en rotation l'arbre 56 avec la couronne 50 qui entraîne en rotation les satellites 60 puis le porte-satellites 58. Cette rotation du porte-satellites est ensuite transmise au travers de la paroi 64 à la couronne 94 du train épicycloïdal de machine 96.

Ainsi, lorsque l'actionneur à griffes 126 est en position 2, le mouvement de rotation de la couronne 94 est transmis au plateau 116 puis à la roue dentée 120 par le palier 118. Cette roue entraîne l'essieu 16 par l'intermédiaire de la roue 122, alors que le planétaire 104 entraîne la machine électrique 22 en rotation par l'intermédiaire des roues 112 et 114.

Lorsque l'actionneur à griffes 126 est en position neutre N, le couple transmis par l'arbre 12 du moteur thermique à la couronne 94 est transféré au porte-satellites 98 par l'intermédiaire des satellites 100 en utilisant la réaction du planétaire 104. Le porte-satellites 98 entraîne alors l'essieu 16 par l'intermédiaire des roues 120 et 122, alors que le planétaire 104 entraîne la machine électrique 22 en rotation par l'intermédiaire des roues 112 et 114

Pour la position inactive de l'embrayage 30 et active de l'embrayage 28, la rotation de l'arbre 12 du moteur thermique 10 entraîne en rotation l'arbre de planétaire 42 avec le planétaire 36. La rotation du planétaire entraîne en rotation les satellites 60 puis le porte-satellites 58. Cette rotation du porte-satellites est ensuite transmise au travers de la paroi 64 à la couronne 94 du train épicycloïdal de machine 96.

A partir de cette configuration, on retrouve le même cheminement de la transmission de mouvement que celui décrit en relation avec la position inactive de l'embrayage 30 pour les positions N ou 2 de l'actionneur à griffes 126.

En phase de décélération, la récupération d'énergie maximale est possible lorsqu'au moins un des embrayages 28 ou 30 est ouvert, puisque dans ce cas, la présence des roues libres 32 et 34 ne permet pas de transmettre de couple de l'essieu 16 vers le moteur thermique 10.

Lorsque les deux embrayages 28 et 30 sont fermés, la puissance provenant de l'essieu est, pour une partie, absorbée par le moteur thermique (frein moteur), et pour une autre partie absorbée par la machine 22 (récupération d'énergie).

Cette configuration permet aussi l'utilisation du véhicule en traction thermique seule, dans le cas où les batteries sont vides, puisque l'utilisation de la machine 22 comme moyen de réaction, permet d'utiliser cette machine en tant que générateur électrique. Ainsi, la puissance du moteur thermique est utilisée, pour une partie, pour la traction du véhicule et, pour l'autre partie pour charger la batterie.

L'utilisation de la machine 22 comme moyen de réaction permet aussi d'obtenir un décollage (démarrage du véhicule à partir de sa vitesse nulle) du véhicule, alors que les embrayages 28 et 30 sont déjà fermés.

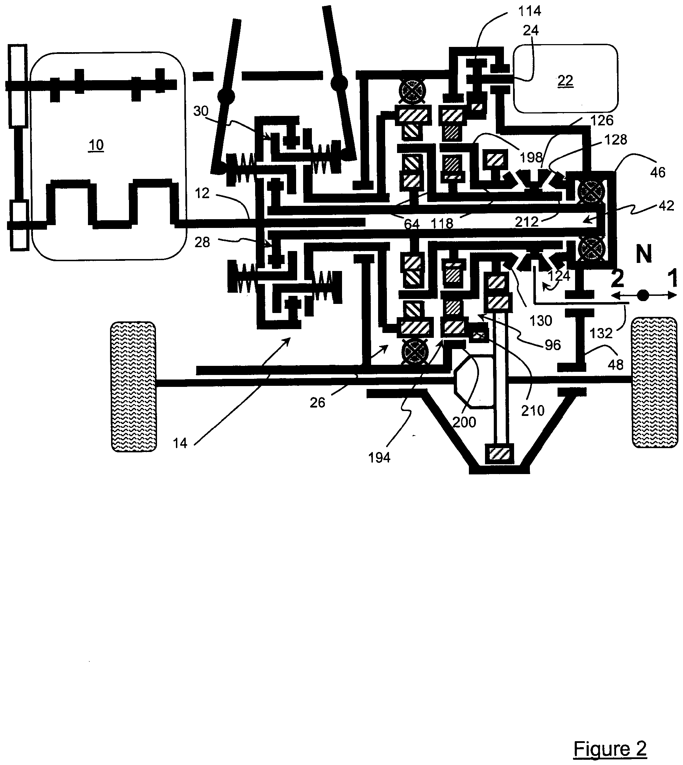

La variante de la figure 2 se distingue de la figure 1 par le fait que la couronne 194 du train épicycloïdal de machine électrique 96 est montée libre en rotation sur un palier 200 prévu sur la partie fixe 48 du véhicule.

Cette couronne est liée fixement à un bandeau denté extérieurement 210 placé coaxialement à cette couronne et coopérant avec la roue dentée 114 du rotor 24 de la machine électrique 22.

Cette variante se distingue également par le fait que le porte-satellites 198 de train épicycloïdal 96 porte une surface d'accouplement 130 placée à l'extrémité libre du palier 118. Cette surface fait partie d'un accouplement à commande contrôlée 124 qui, comme déjà décrit, comprend un actionneur à griffes 126 à deux positions actives (1, 2) et une position neutre (N) sous l'impulsion d'un moyen de commande 132. Cet actionneur est apte à coopérer avec la surface d'accouplement 130 du porte-satellites ou une autre surface d'accouplement 128 portée par une partie fixe 48 du groupe motopropulseur, ici au niveau du palier 46 de réception de l'arbre creux 42. L'actionneur à griffes est monté sur un palier tubulaire 212 portant la paroi verticale 64 du porte-satellites 58 ainsi que le flasque 108 du planétaire 104.

Le fonctionnement de cette variante, tant au niveau de la traction/propulsion électrique que thermique est identique à celui de la figure 1.

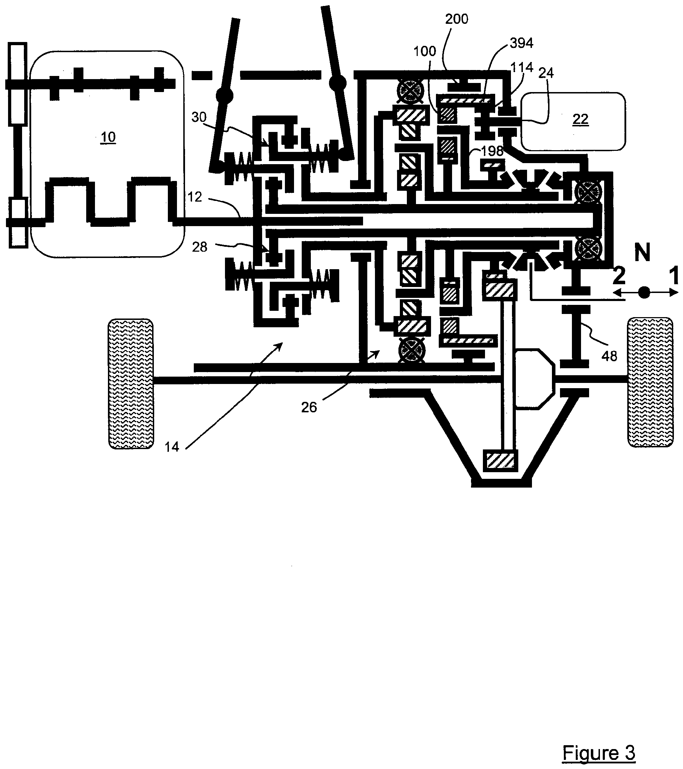

Dans la variante de la figure 3, qui est très voisine de celle de la figure 2, la couronne 94 et le bandeau 210 de la figure 2 ont été regroupés en un seul ensemble sous la forme d'un couronne dentée intérieurement 394. Cette couronne est de plus grande largeur que la couronne dentée de la figure 2 et est logée, de manière libre en rotation, dans un palier 200 porté par la partie fixe 48 du groupe motopropulseur. La piste dentée intérieurement de la couronne 394 est donc prévue pour recevoir la roue dentée 114 de la machine électrique 22 ainsi que les satellites 100 du porte-satellites 198.

De même, cette variante comporte un fonctionnement de traction/propulsion identique à celui de la figure 1.

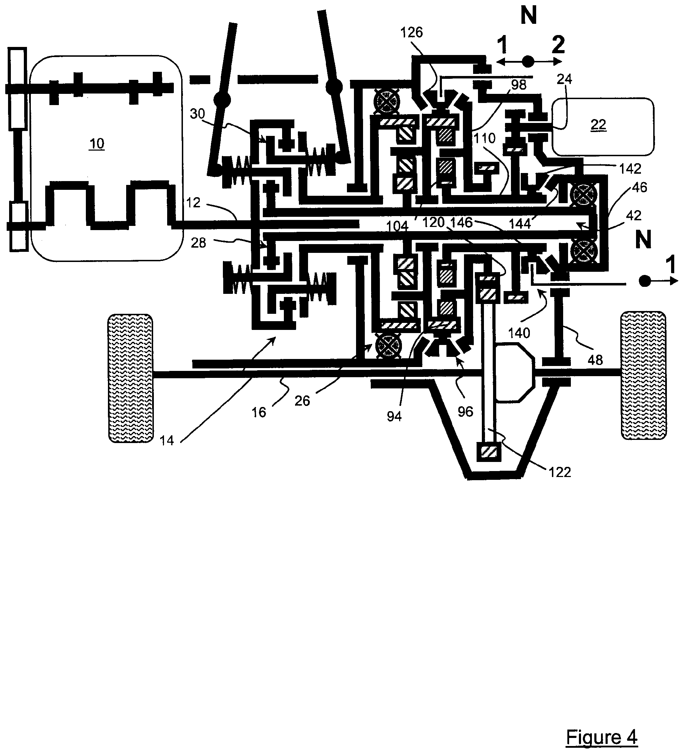

La variante de la figure 4 se distingue de la figure 1 par l'implantation d'un accouplement additionnel 140 à commande contrôlée. Cet accouplement comprend un actionneur 142, à déplacement axial avec une seule position d'engrènement (1) et une position neutre (N), qui est apte à coopérer avec une surface d'accouplement fixe 144 portée par la partie fixe 48 du groupe motopropulseur.

Comme visible sur cette figure 4, l'actionneur 142 est placé sur un prolongement 146 de l'arbre de planétaire 110 et la surface d'accouplement 144 est située en vis-à-vis de cette actionneur et plus particulièrement sur le palier 46 recevant l'extrémité 44 de l'arbre 42.

Cet accouplement additionnel permet d'obtenir la traction du véhicule par le moteur thermique seul sur un rapport court alors que l'actionneur 126 porté par le train épicycloïdal est en position neutre (N).

Lors de l'accouplement entre l'actionneur 142 de l'accouplement additionnel 140 et la surface 144, le planétaire 104 est bloqué en rotation. De ce fait, la puissance transmise par le moteur thermique passe par la couronne 94 et le porte-satellites 98 pour être transmise à l'essieu 16 via les roues dentées 120 et 122.

A l'exception du fonctionnement avec l'accouplement additionnel 140, le fonctionnement du groupe motopropulseur de cette variante est identique à celui de la figure 1.

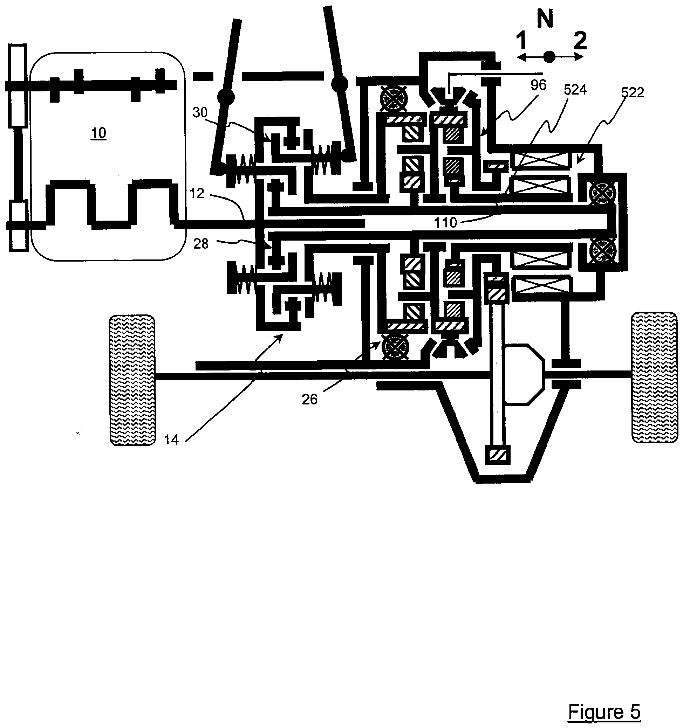

L'exemple de la figure 5 se démarque de celui de la figure 1 par le fait que le rotor 524 de la machine électrique 522 est formé par l'arbre de planétaire 110 et que les roues dentées 112 et 114 ont été supprimées.

Egalement, le fonctionnement de cette variante du groupe motopropulseur est identique à celui de la figure 1.

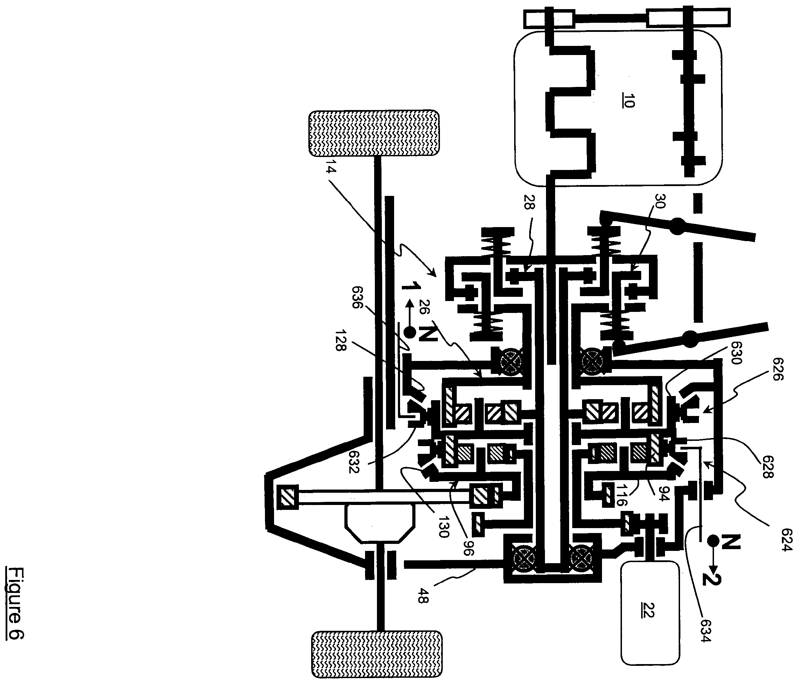

L'exemple illustré sur la figure 6 se démarque de celui de la figure 1 par le fait que les positions 1 et 2 de l'actionneur sont obtenues au moyen de deux accouplements à commande contrôlée 624 et 626 séparés l'un de l'autre tout en étant reliés fixement en rotation mais librement en translation sur la couronne 94 du train 96.

Comme pour la figure 1, l'un 624 des accouplements est porté par la couronne 94 du train épicycloïdal 96 et permet de relier cette couronne 94 au plateau 116.

Cet accouplement comporte un actionneur à griffe 628 à deux positions, une positon neutre (N) et une position active (2) où il coopère avec la surface d'accouplement 130 porté par le plateau 116.

L'autre 626 des accouplements est porté par un appendice axial 630 lié fixement à la couronne 94 du train épicycloïdal de machine 96 et permet de relier la couronne 94 à la partie fixe 48 du groupe motopropulseur.

Cet autre accouplement comporte un actionneur à griffes 632 à deux positions, une position neutre (N) et une position active (1) où il coopère avec la surface d'accouplement fixe 128 portée par la partie fixe 48.

Bien entendu, chacun des actionneurs est soumis à un moyen de commande 634, 636 lui permettant de réaliser, pour l'actionneur 628, l'accouplement avec le plateau 116 (position 2), pour l'actionneur 632, l'accouplement avec la partie fixe 128 du groupe motopropulseur (position 1), ou, pour les deux actionneurs, d'être en position neutre (position N) sans être en liaison avec aucune des deux surfaces d'accouplement.

Le fonctionnement de cette variante pour les autres configurations est également identique à celui de la figure 1.

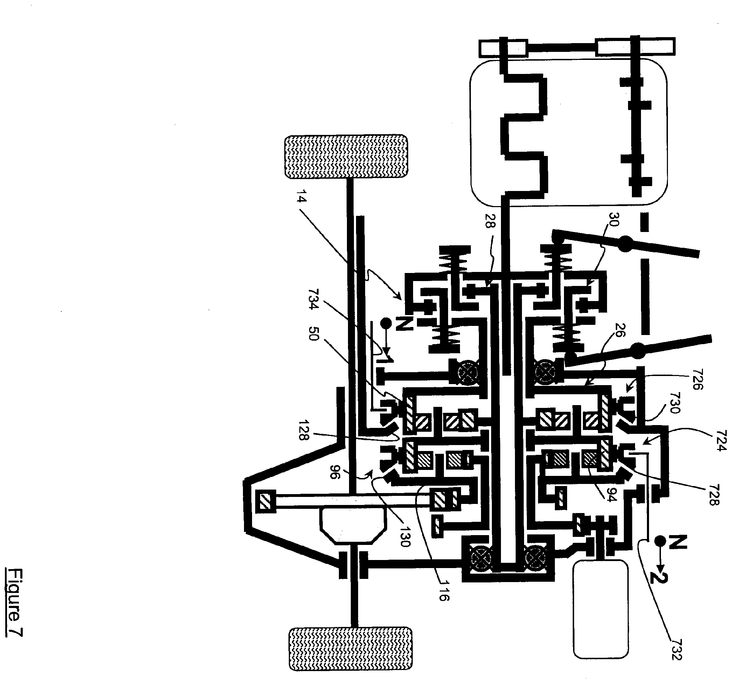

L'exemple illustré sur la figure 7 se démarque de la variante 6 par le fait que les accouplements à commande contrôlée 724, 726 ne sont plus tous deux fixes en rotation avec la couronne 94 du train épicycloïdal de la machine électrique 96.

Seul l'un 724 des accouplements est porté par la couronne 94 du train épicycloïdal de machine 96 et permet de relier cette couronne 94 au plateau 116.

Cet accouplement comporte un actionneur à griffe 728 à deux positions, une positon neutre (N) et une position active (2) où il coopère avec la surface d'accouplement 130 porté par le plateau 116.

L'autre 726 des accouplements est porté par la couronne 50 du train épicycloïdal de moteur 26 et permet de relier cette couronne à une partie fixe 48 du groupe motopropulseur.

Cet autre accouplement comporte un actionneur à griffes 730 à deux positions, une position neutre (N) et une position active (1) où il coopère avec la surface d'accouplement fixe 128 portée par la partie fixe 48.

Comme pour la figure 6, chacun des actionneurs est soumis à un moyen de commande 732, 734 lui permettant de réaliser, pour l'actionneur 728, l'accouplement avec le plateau 116 (position 2), pour l'actionneur 730, l'accouplement avec la partie fixe 128 du groupe motopropulseur (position 1), ou, pour les deux actionneurs, d'être en position neutre (position N) sans être en liaison avec aucune des deux surfaces d'accouplement.

Cette variante permet d'une part, d'obtenir du frein moteur sur le premier rapport du dispositif de variation de vitesse 14, et, d'autre part, de pouvoir faire de la récupération d'énergie lorsque la transmission est utilisée dans un mode de variation continue (correspondant à la position neutre de l'actionneur 126 dans le cas de la figure1).

Comme pour les autres variantes, cette dernière comprend pour l'essentiel les mêmes configurations de fonctionnement.

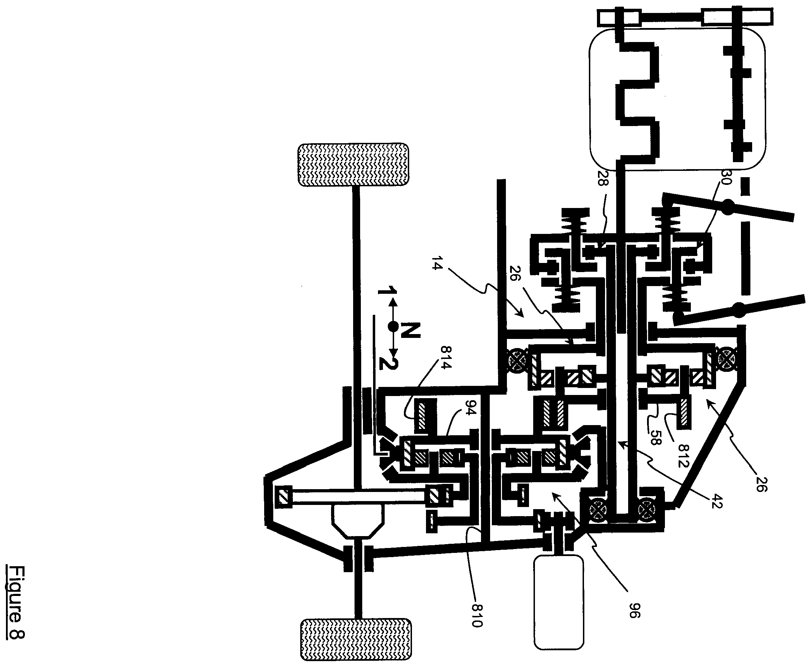

La variante illustré sur la figure 8 se démarque de celui de la figure 1 par le fait que le train épicycloïdal de machine 96 n'est plus coaxial au train épicycloïdal de moteur thermique 26 en entourant l'arbre 42.

La configuration de l'ensemble forme par le dispositif de variation de vitesse 14 est identique à celui de la figure 1 et le train épicycloïdal 96 est placé sur un arbre fixe 810 qui est sensiblement parallèle à l'arbre creux 42 précédemment mentionné pour le train épicycloïdal de moteur.

La liaison à rotation entre les deux trains est assurée par la coopération de deux bandeaux dentés 812, 814.

L'un 812 des bandeaux est porté par le porte-satellites 58 du train épicycloïdal 26 et coopère à engrènement avec l'autre 814 des bandeaux qui est porté par la couronne 94 du train 96.

L'avantage d'une telle disposition permet d'obtenir une rotation de l'essieu 16 qui soit dans le même sens que l'arbre 12 du moteur thermique 10.

Egalement, le fonctionnement de cette variante est identique à celui mentionné pour la figure 1.

Les configurations décrites ci-dessus permettent ainsi d'obtenir deux rapports de vitesse lorsque le véhicule est entraîné par le moteur électrique et trois rapports de vitesse pour l'entraînement par le moteur thermique.

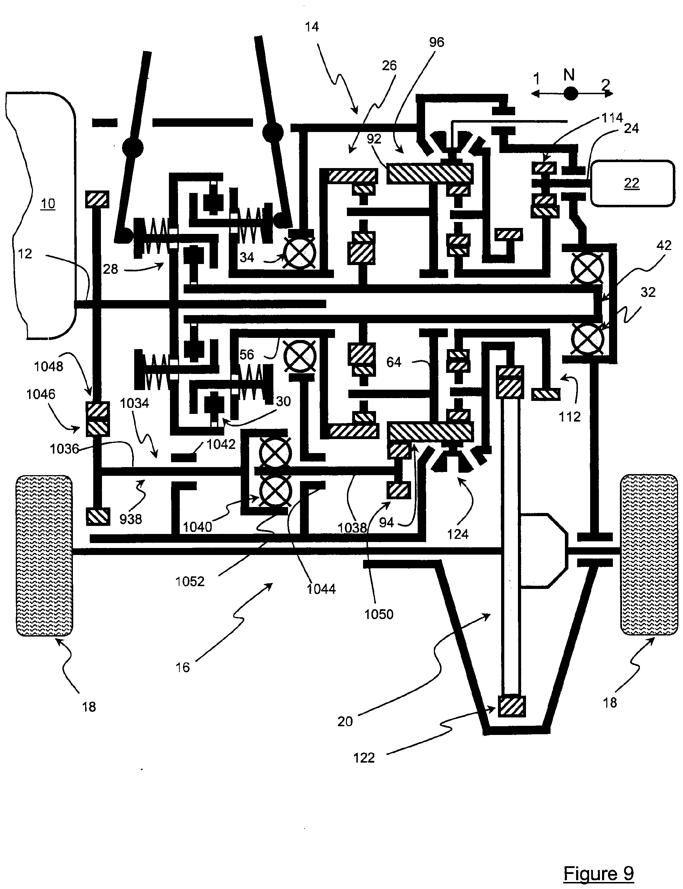

Dans un souci constant d'amélioration, le demandeur a encore perfectionné ce dispositif de transmission à vitesse variable en offrant la possibilité de pouvoir entraîner le véhicule par le moteur thermique selon un quatrième rapport de vitesse supplémentaire, comme cela est illustré sur la figure 9.

Grâce à ce rapport supplémentaire de vitesse, le moteur thermique est utilisé sur un meilleur point de fonctionnement toute en disposant d'un couple à la roue plus important.

Sur la figure 9, le groupe motopropulseur comprend le moteur thermique 10 et un dispositif de variation de vitesse 14. Ce groupe motopropulseur comprend également une machine électrique 22 avec un rotor 24.

Ce groupe est associé à un essieu moteur 16 qui permet d'entraîner les roues motrices 18 du véhicule, avantageusement par l'intermédiaire d'un pont différentiel 20.

Le dispositif de variation de vitesse 14 comprend un train épicycloïdal de moteur 26, un autre train épicycloïdal de machine 96, deux embrayages à commande contrôlée 28, 30, deux accouplements unidirectionnels automatiques, ici des roues libres 32, 34, et une voie de transmission de mouvement de rotation 938, dénommée voie de transmission de vitesse.

Le train épicycloïdal de moteur 26 comprend les mêmes éléments que ceux décrits en relation avec la figure 1.

Le train épicycloïdal de machine 96, qui est placé coaxialement au train épicycloïdal de moteur 26, se distingue de celui de la figure 1, par le fait que le bandeau 92 de la couronne 94 s'étend sur une plus grande longueur et de part et d'autre du voile 64. Ce bandeau présente également une denture périphérique extérieure.

La voie de transmission de mouvement de rotation 938 de ce dispositif de variation de vitesse comprend un arbre de transmission de mouvement de rotation 1034 sensiblement parallèle à l'arbre de moteur 12 ainsi qu'aux arbres de couronne 56 et de planétaire 42. Cet arbre se compose avantageusement de deux parties 1036 et 1038 (ou demi-arbres) reliées entre elles par un accouplement unidirectionnel 1040, ici sous la forme d'une roue libre. Chaque demi-arbre 1036, 1038 est porté par un palier 1042, respectivement 1044, issu d'une partie fixe du groupe motopropulseur et la roue libre 1040 est située entre ces deux paliers.

Cet arbre porte des moyens de liaison en rotation avec l'arbre 12 et la couronne 94 du train 96. Ainsi, le demi-arbre 1036 porte sur son extrémité dirigée vers le moteur 10 une roue dentée 1046 qui coopère avec une roue dentée 1048 portée par l'arbre de moteur 12 et qui est située entre ce moteur et l'embrayage 28 en formant ainsi un engrenage assurant les moyens de liaison en rotation avec l'arbre 12.

L'autre demi-arbre 1038 porte, à son extrémité dirigée vers la machine 22, une roue dentée 1050 qui coopère à engrènement avec la denture extérieure du bandeau 92 de la couronne 94 du train épicycloïdal de machine 96 en constituant également des moyens de liaison en rotation avec cette couronne.

Bien entendu, il peut être envisagé d'utiliser tous autres systèmes pour assurer la liaison à rotation comme des courroies crantées, des chaînes, ...

Comme cela est mieux visible sur la figure, l'extrémité libre de l'un deux demi-arbres porte une cage 1052 dans laquelle est placée la roue libre 1040 alors que l'extrémité libre de l'autre de ces demi-arbres prend appui sur le diamètre intérieur de cette roue libre.

Ceci permet d'obtenir une rotation simultanée des deux demi-arbres que dans un seul sens de rotation.

Pour obtenir un autre rapport de vitesse réalisé en dehors des trains épicycloïdaux 26 et 96, celui-ci se réalise au travers de la voie de transmission de vitesse 938 avec les embrayages 28 et 30 en position inactive et l'accouplement 124 en position N ou 2.

Le mouvement de rotation de l'arbre 12 du moteur 10 est transmis au demi-arbre 1036 par l'engrenage formé par les roues dentées 1048 et 1046. Ce mouvement de rotation de ce demi-arbre est ensuite transféré sur l'autre demi-arbre 1038 au travers de la roue libre 1040 qui est alors active de manière à entraîner dans le même sens de rotation l'autre demi-arbre 1038. La rotation de ce demi-arbre est transmise à la couronne 94 par la roue dentée 1050.

Comme précédemment décrit, on retrouve, à partir de cette configuration, le même cheminement de la transmission de mouvement de la couronne 94 vers les roues dentées 120 et 112.

Ceci permet ainsi de réaliser un autre rapport de vitesse sans utiliser le train épicycloïdal de moteur et en dérivation de celui-ci, tout en se servant du train épicycloïdal de machine.

## Revendications

1. Groupe motopropulseur de véhicule automobile de type hybride comportant une machine électrique (22), un moteur thermique (10), un dispositif de variation de vitesse (14) comprenant un train épicycloïdal de moteur (26) avec un planétaire (36) et une couronne (50) reliés chacun à l'arbre (12) du moteur thermique (10) par un embrayage à commande contrôlée (28, 30) et à une partie fixe (48) du véhicule par un accouplement unidirectionnel (32, 34), et une voie de transmission de mouvement (120, 122) à un essieu moteur (16), le groupe motopropulseur comprenant un autre train épicycloïdal (96) accouplé avec le train épicycloïdal de moteur (26) et la machine électrique, ledit autre train portant un accouplement à commande contrôlée raccordant ce train à une partie fixe (128) du groupe motopropulseur ou à ladite voie de transmission de mouvement (120, 122).

2. Groupe motopropulseur de véhicule automobile de type hybride selon la revendication 1, **caractérisé en ce qu'**il comprend au moins un accouplement à commande contrôlée (124, 140; 626, 628) porté par au moins l'un des éléments de l'autre train épicycloïdal (96).

3. Groupe motopropulseur de véhicule automobile de type hybride selon la revendication 1 ou 2, **caractérisé en ce qu'**il comprend au moins un accouplement à commande contrôlée (730) porté par au moins l'un des éléments du train épicycloïdal de moteur (26).

4. Groupe motopropulseur de véhicule automobile de type hybride selon la revendication 3, **caractérisé en ce que** l'accouplement à commande contrôlée (730) est porté par la couronne (50) du train épicycloïdal de moteur (26).

5. Groupe motopropulseur de véhicule automobile de type hybride selon l'une des revendications précédentes, **caractérisé en ce que** l'accouplement à commande contrôlée (124, 140, 726) comprend un actionneur (126, 142, 728, 730) et au moins une surface d'accouplement (128, 130; 144) avec ledit actionneur.

6. Groupe motopropulseur de véhicule automobile de type hybride selon l'une des revendications précédentes, **caractérisé en ce que** la surface d'accouplement (128, 144) est portée par une partie fixe (48) du groupe motopropulseur.

7. Groupe motopropulseur de véhicule automobile de type hybride selon l'une des revendications précédentes, **caractérisé en ce que** la surface d'accouplement (130) est portée par l'un des éléments de l'autre train épicycloïdal (96).

8. Groupe motopropulseur de véhicule automobile de type hybride selon l'une des revendications précédentes, **caractérisé en ce que** la surface d'accouplement (130) est portée par le porte-satellites (98) de l'autre train épicycloïdal (96).

9. Groupe motopropulseur de véhicule automobile de type hybride selon l'une des revendications précédentes, **caractérisé en ce que** l'actionneur (126, 142) est porté par l'un des éléments constitutifs de l'autre train épicycloïdal (96).

10. Groupe motopropulseur de véhicule automobile de type hybride selon l'une des revendications précédentes, **caractérisé en ce que** l'actionneur (126) est porté par la couronne (94) de l'autre train épicycloïdal (96).

11. Groupe motopropulseur de véhicule automobile de type hybride selon l'une des revendications précédentes, **caractérisé en ce que** l'actionneur (126, 142) est porté par le planétaire (104) de l'autre train épicycloïdal (96).

12. Groupe motopropulseur de véhicule automobile de type hybride selon l'une des revendications précédentes, **caractérisé en ce que** le train épicycloïdal de machine (26) et l'autre train épicycloïdal (96) sont placés coaxialement l'un avec l'autre.

13. Groupe motopropulseur de véhicule automobile de type hybride selon l'une des revendications précédentes, **caractérisé en ce qu'**il comprend une voie de transmission de mouvement de rotation (938) parallèle à l'arbre de moteur (12) pour la liaison entre ledit arbre (12) de moteur et la couronne (94) de l'un (96) des trains épicycloïdaux.

14. Groupe motopropulseur selon la revendication 13, caractérisé en ce ladite voie comprend un arbre de transmission (1034) portant des moyens de liaison en rotation (1046, 1048 ; 1050) avec l'arbre (12) et la couronne (94).

15. Groupe motopropulseur selon la revendication 13 ou 14, **caractérisé en ce que** ladite voie comprend deux demi-arbres (1034, 1038) reliés entre eux par un accouplement unidirectionnel (1040).

16. Groupe motopropulseur selon la revendication 15, **caractérisé en ce que** l'accouplement unidirectionnel comprend une roue libre (1040).

17. Groupe motopropulseur selon la revendication 14, **caractérisé en ce que** les moyens de liaison avec l'arbre (12) comprennent un engrenage (1046, 1048).

18. Groupe motopropulseur selon la revendication 14, **caractérisé en ce que** les moyens de liaison avec la couronne (94) comprennent une roue dentée (1050) coopérant avec une denture extérieure portée par le bandeau (92) de ladite couronne.

19. Groupe motopropulseur selon l'une des revendications 14 à 18, **caractérisé en ce que** l'arbre de transmission (1034) est parallèle de l'arbre (12) de moteur.

20. Groupe motopropulseur selon l'une des revendications 14 à 19, **caractérisé en ce que** l'arbre de transmission (1034) est supporté par des paliers (1042, 1044) portés par une partie fixe dudit groupe.

## Patentansprüche

1. Antriebsstrang für ein Kraftfahrzeug vom Hybridtyp, umfassend eine elektrische Maschine (22), einen Verbrennungsmotor (10), eine Drehzahlveränderungsvorrichtung (14), umfassend ein Planetengetriebe des Motors (26) mit einem Sonnenrad (36) und einem Hohlrad (50), die jeweils mit der Welle (12) des Verbrennungsmotors (10) durch eine Kupplung mit kontrollierter Steuerung (28, 30) und mit einem festen Teil (48) des Fahrzeugs durch eine unidirektionale Kupplung (32, 34) verbunden sind, und einen Übertragungspfad der Bewegung (120, 122) an eine Antriebsachse (16), wobei der Antriebsstrang ein anderes Planetengetriebe (96) aufweist, das mit dem Planetengetriebe des Motors (26) und der elektrischen Maschine gekoppelt ist, wobei das andere Getriebe eine Kupplung mit kontrollierter Steuerung trägt, die dieses Getriebe mit einem festen Teil (128) des Antriebsstrangs oder mit dem Übertragungspfad der Bewegung (120, 122) verbindet.

2. Antriebsstrang für ein Kraftfahrzeug vom Hybridtyp nach Anspruch 1, **dadurch gekennzeichnet, dass** er mindestens eine Kupplung mit kontrollierter Steuerung (124, 140; 626, 628) aufweist, die von mindestens einem der Elemente des anderen Planetengetriebes (96) getragen ist.

3. Antriebsstrang für ein Kraftfahrzeug vom Hybridtyp nach Anspruch 1 oder 2, **dadurch gekennzeichnet, dass** er mindestens eine Kupplung mit kontrollierter Steuerung (730) aufweist, die von mindestens einem der Elemente des Planetengetriebes des Motors (26) getragen ist.

4. Antriebsstrang für ein Kraftfahrzeug vom Hybridtyp nach Anspruch 3, **dadurch gekennzeichnet, dass** die Kupplung mit kontrollierter Steuerung (730) von dem Hohlrad (50) des Planetengetriebes des Motors (26) getragen ist.

5. Antriebsstrang für ein Kraftfahrzeug vom Hybridtyp nach einem der vorhergehenden Ansprüche, **dadurch gekennzeichnet, dass** die Kupplung mit kontrollierter Steuerung (124, 140, 726) einen Aktuator (126, 142, 728, 730) und mindestens eine Kupplungsfläche (128, 130; 144) mit dem Aktuator aufweist.

6. Antriebsstrang für ein Kraftfahrzeug vom Hybridtyp nach einem der vorhergehenden Ansprüche, **dadurch gekennzeichnet, dass** die Kupplungsfläche (128, 144) durch einen festen Teil (48) des Antriebsstrangs getragen ist.

7. Antriebsstrang für ein Kraftfahrzeug vom Hybridtyp nach einem der vorhergehenden Ansprüche, **dadurch gekennzeichnet, dass** die Kupplungsfläche (130) durch eines der Elemente des anderen Planetengetriebes (96) getragen ist.

8. Antriebsstrang für ein Kraftfahrzeug vom Hybridtyp nach einem der vorhergehenden Ansprüche, **dadurch gekennzeichnet, dass** die Kupplungsfläche (130) durch den Planetenradträger (98) des anderen Planetengetriebes (96) getragen ist.

9. Antriebsstrang für ein Kraftfahrzeug vom Hybridtyp nach einem der vorhergehenden Ansprüche, **dadurch gekennzeichnet, dass** der Aktuator (126, 142) durch einen der Bestandteile des anderen Planetengetriebes (96) getragen ist.

10. Antriebsstrang für ein Kraftfahrzeug vom Hybridtyp nach einem der vorhergehenden Ansprüche, **dadurch gekennzeichnet, dass** der Aktuator (126) durch das Hohlrad (94) des anderen Planetengetriebes (96) getragen ist.

11. Antriebsstrang für ein Kraftfahrzeug vom Hybridtyp nach einem der vorhergehenden Ansprüche, **dadurch gekennzeichnet, dass** der Aktuator (126, 142) durch das Sonnenrad (104) des anderen Planetengetriebes (96) getragen ist.

12. Antriebsstrang für ein Kraftfahrzeug vom Hybridtyp nach einem der vorhergehenden Ansprüche, **dadurch gekennzeichnet, dass** das Planetengetriebe des Motors (26) und das andere Planetengetriebe (96) koaxial zueinander angeordnet sind.

13. Antriebsstrang für ein Kraftfahrzeug vom Hybridtyp nach einem der vorhergehenden Ansprüche, **dadurch gekennzeichnet, dass** es einen Übertragungspfad einer Drehbewegung (938), der parallel zu der Motorwelle (12) ist, für die Verbindung zwischen der Motorwelle (12) und dem Hohlrad (94) von einem (96) der Planetengetriebe aufweist.

14. Antriebsstrang nach Anspruch 13, **dadurch gekennzeichnet, dass** der Pfad eine Antriebswelle (1034) aufweist, die Mittel zur Drehverbindung (1046, 1048; 1050) mit der Welle (12) und dem Hohlrad (94) trägt.

15. Antriebsstrang nach Anspruch 13 oder 14, **dadurch gekennzeichnet, dass** der Pfad zwei Halbwellen (1034, 1038) aufweist, die miteinander durch eine unidirektionale Kupplung (32, 34) verbunden sind.

16. Antriebsstrang nach Anspruch 15, **dadurch gekennzeichnet, dass** die unidirektionale Kupplung ein Freilaufrad (1040) aufweist.

17. Antriebsstrang nach Anspruch 14, **dadurch gekennzeichnet, dass** die Mittel zur Verbindung mit der Welle (12) ein Getriebe (1046, 1048) aufweisen.

18. Antriebsstrang nach Anspruch 14, **dadurch gekennzeichnet, dass** die Mittel zur Verbindung mit dem Hohlrad (94) ein Zahnrad (1050) aufweisen, das mit einer Außenverzahnung zusammenwirkt, die von dem Streifen (92) des Hohlrads getragen ist.

19. Antriebsstrang nach einem der Ansprüche 14 bis 18, **dadurch gekennzeichnet, dass** die Antriebswelle (1034) parallel zu der Motorwelle (12) ist.

20. Antriebsstrang nach einem der Ansprüche 14 bis 19, **dadurch gekennzeichnet, dass** die Antriebswelle (1034) von Lagern (1042, 1044) gehalten ist, die durch einen festen Teil des Strangs getragen sind.

## Claims

1. A hybrid type vehicle powertrain comprising an electric machine (22), a thermal engine (10), a speed variation device (14) including an engine epicyclic gear train (26) with a sun gear (36) and a crown (50), each connected to shaft (12) of thermal engine (10) by a controlled clutch (28,30) and to a fixed part (48) of the vehicle by a one-way coupling (32, 34), and a track (120, 122) for motion transmission to a drive axle (16), the powertrain comprising another epicyclic gear train (96) coupled with engine epicyclic gear train (26) and the electric machine, said other gear train carrying a controlled coupling connecting this gear train to a fixed part (128) of the powertrain or to said motion transmission track (120, 122).

2. A hybrid type vehicle powertrain as claimed in claim 1, **characterized in that** it comprises at least one controlled coupling (124, 140; 626, 628) carried by at least one of the elements of the other epicyclic gear train (96).

3. A hybrid type vehicle powertrain as claimed in claim 1 or 2, **characterized in that** it comprises at least one controlled coupling (730) carried by at least one of the elements of engine epicyclic gear train (26).

4. A hybrid type vehicle powertrain as claimed in claim 3, **characterized in that** controlled coupling (730) is carried by crown (50) of engine epicyclic gear train (26).

5. A hybrid type vehicle powertrain as claimed in any one of the previous claims, **characterized in that** controlled coupling (124, 140, 726) comprises an actuator (126, 142, 728, 730) and at least one coupling surface (128, 130; 144) for coupling with said actuator.

6. A hybrid type vehicle powertrain as claimed in any one of the previous claims, **characterized in that** coupling surface (128, 144) is carried by a fixed part (48) of the powertrain.

7. A hybrid type vehicle powertrain as claimed in any one of the previous claims, **characterized in that** coupling surface (130) is carried by one of the elements of the other epicyclic gear train (96).

8. A hybrid type vehicle powertrain as claimed in any one of the previous claims, **characterized in that** coupling surface (130) is carried by planet gear carrier (98) of the other epicyclic gear train (96).

9. A hybrid type vehicle powertrain as claimed in any one of the previous claims, **characterized in that** actuator (126, 142) is carried by one of the constituent elements of the other epicyclic gear train (96).

10. A hybrid type vehicle powertrain as claimed in any one of the previous claims, **characterized in that** actuator (126) is carried by crown (94) of the other epicyclic gear train (96).

11. A hybrid type vehicle powertrain as claimed in any one of the previous claims, **characterized in that** actuator (126, 142) is carried by sun gear (104) of the other epicyclic gear train (96).

12. A hybrid type vehicle powertrain as claimed in any one of the previous claims, **characterized in that** machine epicyclic gear train (26) and the other epicyclic gear train (96) are arranged coaxially to one another.

13. A hybrid type vehicle powertrain as claimed in any one of the previous claims, **characterized in that** it comprises a rotating motion transmission track (938) parallel to engine shaft (12) for connection between said engine shaft (12) and crown (94) of one (96) of the epicyclic gear trains.

14. A powertrain as claimed in claim 13, **characterized in that** said track comprises a transmission shaft (1034) carrying means (1046, 1048; 1050) for rotational connection with shaft (12) and crown (94).

15. A powertrain as claimed in claim 13 or 14, **characterized in that** said track comprises two half shafts (1034, 1038) connected to one another by a one-way coupling (1040).

16. A powertrain as claimed in claim 15, **characterized in that** the one-way coupling comprises a free wheel (1040).

17. A powertrain as claimed in claim 14, **characterized in that** the means allowing connection with shaft (12) comprise a gear (1046, 1048).

18. A powertrain as claimed in claim 14, **characterized in that** the means allowing connection with crown (94) comprise a toothed wheel (1050) cooperating with external teeth carried by strip (92) of said crown.

19. A powertrain as claimed in any one of claims 14 to 18, **characterized in that** transmission shaft (1034) is parallel to engine shaft (12).

20. A powertrain as claimed in any one of claims 14 to 19, **characterized in that** transmission shaft (1034) is supported by bearings (1042, 1044) carried by a fixed part of said powertrain.
